# EUROPEAN PATENT APPLICATION

(11) **EP 3 514 010 A1**
(43) Date of publication of application: **24.07.2019**
(21) Application number: 18382026.5
(22) Date of filing: 18.01.2018
(51) Int. Cl.: B60Q 1/00, F21S 45/00

(54) **AUTOMOTIVE LIGHTING DEVICE**

(71) Applicant: Valeo Iluminacion, 23600 Martos (ES)
(72) Inventor: MOISY, Eric, 23600 MARTOS (ES); CABANNE, Damien, 23600 MARTOS (ES); RUIZ, Francisco, 23600 MARTOS (ES); FERNANDEZ, Ricardo, 23600 MARTOS (ES); TUDELA, Santos, 23600 MARTOS (ES); TORRES-GONZALEZ, Alejandro, 23600 MARTOS (ES); SANCHEZ-ALGUACIL, Ramon, 23600 MARTOS (ES)

(57) **Abstract**

The invention provides an automotive lighting device (1) comprising a housing (2). The housing (2) comprises a main connector (3) and a conductive wire (4) in electrical connection with the main connector (3), the conductive wire (4) being suitable for providing electrical supply and/or data to at least an electronic element, the conductive wire (4) comprising an extensible portion. The extensible portion (40) is configurable in an extended position and in a rest position, and the extensible portion (40) in the extended position suffers a recovery force that bias the extensible portion (40) towards the rest position.

## Description

### TECHNICAL FIELD

This invention is related to the field of internal electrical connections in automotive lighting devices.

### STATE OF THE ART

When manufacturing a lighting device, lighting modules are both mechanically and electrically connected into a lighting housing.

A spare portion of wire is needed to provide a margin for the connection of the lighting module to the connector. The spare portion is used to connect the lighting module and then is stored behind the module when it is mechanically connected to the housing. However, this stored spare portion may entangle or even cut by other elements in this process.

An alternative solution to the aforementioned problem is sought.

### DESCRIPTION OF THE INVENTION

The invention provides an alternative solution for avoiding entangling of the spare portion by means of an automotive lighting device according to claim 1. Preferred embodiments of the invention are defined in dependent claims.

In a first inventive aspect, the invention provides an automotive lighting device comprising a housing, the housing comprising a main connector and a conductive wire in electrical connection with the main connector, the conductive wire being suitable for providing electrical supply and/or data to at least an electronic element, the conductive wire comprising an extensible portion,
wherein the extensible portion is configurable in an extended position and in a rest position, and wherein the extensible portion in the extended position suffers a recovery force that biases the extensible portion towards the rest position.

This extensible portion is a portion of the conductive wire, which may be configured in at least two positions. A first extended position where the extensible portion is statically unstable; the extensible portion may only be at the extended position as long as a force is applied in the sense of extending it. When this force disappears, a recovery force biases the extensible portion back to its rest position.

This automotive lighting device deals with the problem of entangling of the spare portions provided in a conductive wire which electrically supplies an electronic element, such as a lighting module. The electronic element may be electrically connected to the conductive wire by extending the extensible portion to the extended position, and when this lighting module is released, the extensible portion returns to its rest position, hence being compressed in a more controlled location than if it was just a standard spare portion, which could uncontrolledly be entangled behind the electronic element.

In some particular embodiments, the extensible portion comprises a plastically deformed segment, in such a way that in the rest position, the plastically deformed segment is folded and in the extended position the plastically deformed segment is at least partially unfolded.

Such a plastically deformed conductive material provides a great extension stroke, since two portions of the conductive material are brought closer plastically. The force that tries to separate these two portions by unfolding the folded segment is useful when connecting the electronic element to the conductive wire, and when this force is ceased, the conductive material returns to the rest state, where the portions are closer again and therefore, the spare portion is controllably stored.

In some particular embodiments, the extensible portion has a helical shape.

A helix is a good shape for storing the spare portion of the conductive wire controllably.

In some particular embodiments, the recovery force comprises the elastic recovery force of the plastically deformed conductive material or a spring force.

The elastic recovery force biases the conductive material back to the rest state, where the spare portion is stored. A spring is a particular example of this elastic recovery force.

In some particular embodiments, the extensible portion comprises an elastomeric material.

An elastomeric material is an alternative way of providing an extensible portion with an extended position and a rest position. An elastomeric material is understood as any material whose glass transition temperature is below room temperature (25°C). Glass transition temperature is considered to be the measurement obtained through differential scanning calorimetry with modulated temperature.

These materials have high elongation and flexibility against breaking or cracking. Elastomeric materials are joined by chemical bonds defining crosslinked structures, which provide a way of managing the stress and confer these particular mechanical properties.

Particular examples of elastomeric materials are rubbers, styrene-butadiene materials, Thermoplastic polyurethane or Thermoplastic vulcanizate.

In some particular embodiments, the recovery force comprises the elastic recovery force of the elastomeric material.

The elastomeric material is enough to controllably compress the extensible portion of the conductive wire.

In some particular embodiments, the elastomeric material is attached in at least two points to the conductive wire.

In these embodiments, the elastomeric material transmits the extension and compression movements to the conductive wire.

In some particular embodiments, the conductive wire surrounds the elastomeric material.

In these embodiments, the conductive wire surrounding the elastomeric material may be extended or compressed around the elastomeric material.

In some particular embodiments, the extensible portion has a cross section which is a rectangle with one dimension more than 10 times greater than the other.

This cross section fits advantageously with the plastic deformation, since it may be stacked, thus providing a great extension stroke and a very low compressed space.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a and 1b show different positions of a first embodiment of such a lighting device 1.
Figures 2a and 2b show different positions of a second embodiment of such a lighting device 1.
Figures 3a and 3b show different positions of a third embodiment of such a lighting device 1.

### DETAILED DESCRIPTION OF THE INVENTION

The following figures show different embodiments of an automotive lighting device 1 according to the invention. These lighting devices 1 comprise a housing 2, and the housing 2 comprises a main connector 3 and a conductive wire 4 in electrical connection with the main connector 3. The conductive wire 4 is suitable for providing electrical supply to an electronic element, and the conductive wire 4 comprises an extensible portion 40.

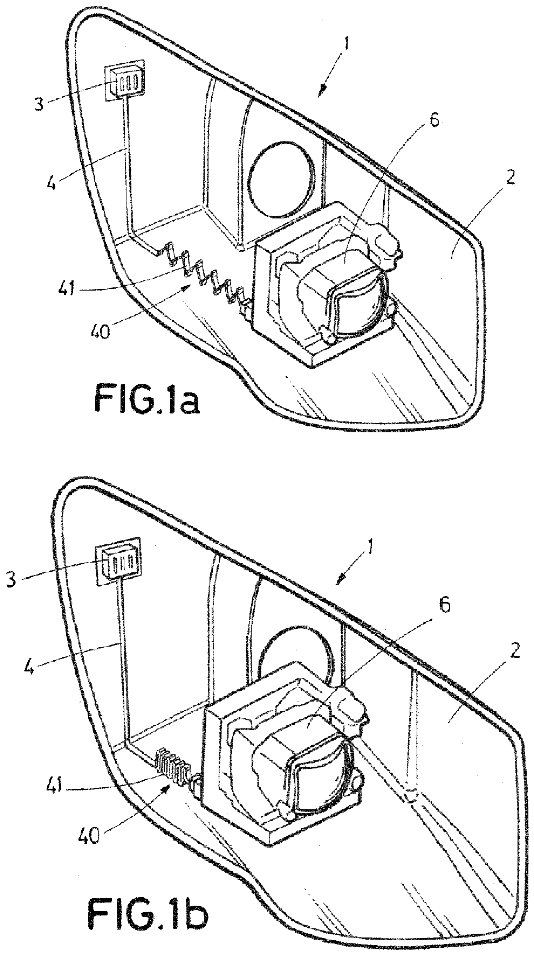

Figures 1a and 1b show different positions of a first embodiment of such a lighting device 1.

The extensible portion 40 comprises a plastically deformed conductive material 41. This plastic deformation brings two portions of the conductive material closer than before the plastic deformation. In this particular case, the conductive material is folded over several times, so that the folded portions are brought to substantially parallel planes, thus achieving an accordion arrangement. The extensible portion has a cross section which is a rectangle with one dimension more than 10 times greater than the other. This conductive wire is very slim, which helps to reduce the space occupied in the rest position.

This extensible portion 40 is therefore configurable in an extended position and in a rest position. When the extensible portion 40 is configured in the extensible position, the folded segment is at least partially unfolded, and the extended portion 40 suffers an elastic recovery force of the unfolded plastically deformed conductive material 41 that biases the extensible portion 40 back towards the rest position.

Figure 1a shows this conductive wire 4 in an extended position, which is useful to mount the lighting module 6 in the lighting device 1. Figure 1b shows the conductive wire 4 in the rest position: after connecting the lighting module electrically, the operator releases the force and the conductive wire 4 comes back to its rest position, where the spare portion of the conductive wire 4 is controllably stored.

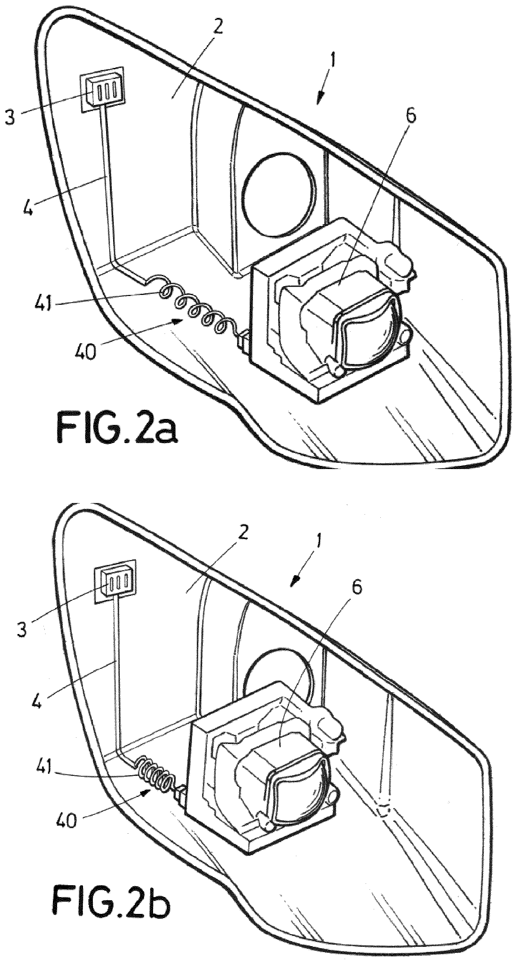

Figures 2a and 2b show different positions of a first embodiment of such a lighting device 1.

The extensible portion 40 comprises a plastically deformed conductive material 41, but in this case, the conductive material 41 has a helical shape. This plastic deformation brings also two portions of the conductive material closer than before the plastic deformation, but in this particular case, the conductive material is rolled, thus achieving a phone cable arrangement.

This extensible portion 40 is therefore configurable in an extended position and in a rest position. When the extensible portion 40 is configured in the extensible position, the extended portion 40 suffers an elastic recovery force of the plastically deformed conductive material 41 that bias the extensible portion 40 towards the rest position.

Figure 2a shows this conductive wire 4 in an extended position, which is useful to mount the lighting module 6 in the lighting device 1. Figure 2b shows the conductive wire 4 in the rest position: after connecting the lighting module electrically, the operator releases the force and the conductive wire 4 comes back to its rest position, where the spare portion of the conductive wire 4 is controllably stored.

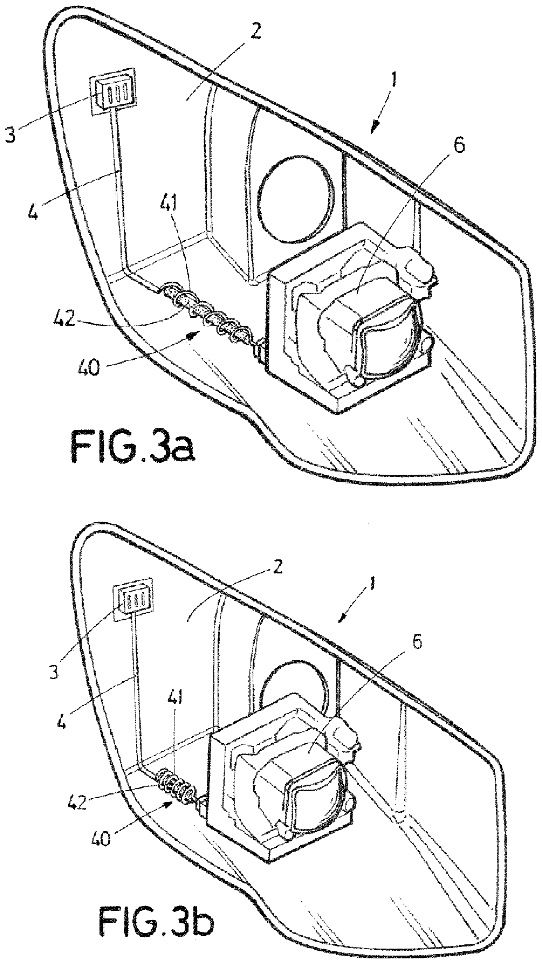

Figures 3a and 3b show different positions of a first embodiment of such a lighting device 1.

The extensible portion 40 comprises an elastomeric material 42. The conductive wire 4 surrounds the elastomeric material 42 and is attached thereto in two points. The spare portion of the conductive wire 4 encompasses the elastomeric material 42.

This extensible portion 40 is therefore configurable in an extended position and in a rest position. When the extensible portion 40 is configured in the extensible position, the elastomeric material 42 suffers an elastic recovery force that bias the extensible portion 40 towards its rest position.

Figure 3a shows this extensible portion 40 in an extended position, which is useful to mount the lighting module 6 in the lighting device 1. Figure 3b shows the extensible portion 40 in the rest position: after connecting the lighting module electrically, the operator releases the force and the conductive wire 4 comes back to its rest position, where the spare portion of the conductive wire 4 is controllably stored. When the elastomeric material 42 is extended, the conductive wire 4 follows a straighter path around the elastomeric material 42, and when it gets back to the rest position, it rolls around it, filling the contour of the elastomeric material.

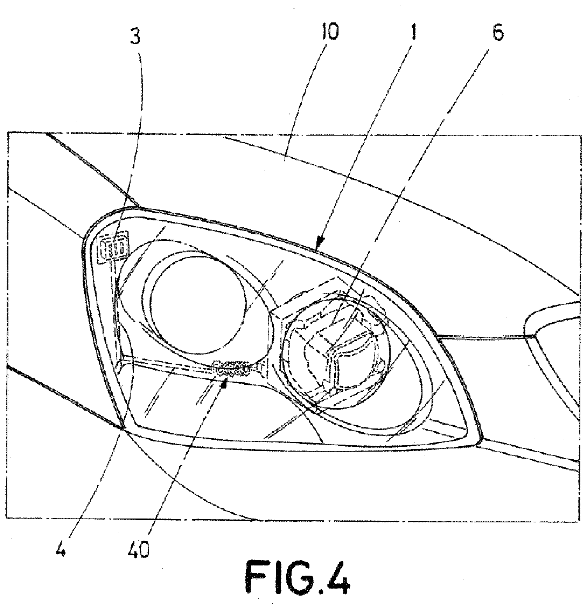

Figure 4 shows a lighting device 1 according to the invention installed in an automotive vehicle 10.

## Claims

1. Automotive lighting device (1) comprising a housing (2), the housing (2) comprising a main connector (3) and a conductive wire (4) in electrical connection with the main connector (3), the conductive wire (4) being suitable for providing electrical supply and/or data to at least an electronic element, the conductive wire (4) comprising extensible portion (40), wherein the extensible portion (40) is configurable in an extended position and in a rest position, and wherein the extensible portion (40) in the extended position suffers a recovery force that biases the extensible portion (40) towards the rest position.

2. Automotive lighting device (1) according to claim 1, wherein the extensible portion (40) comprises a plastically deformed segment, in such a way that in the rest position, the plastically deformed segment is folded and in the extended position the plastically deformed segment is at least partially unfolded.

3. Automotive lighting device (1) according to any of claims 1 or 2, wherein the extensible portion (40) has a helical shape.

4. Automotive lighting device (1) according to claim 3, wherein the recovery force comprises a spring force.

5. Automotive lighting device (1) according to any of the preceding claims, wherein the extensible portion (40) comprises an elastomeric material (42).

6. Automotive lighting device according to claim 5, wherein the recovery force comprises the elastic recovery force of the elastomeric material (42).

7. Automotive lighting device (1) according to any of claims 5 or 6, wherein the elastomeric material is attached in at least two points to the conductive wire (4).

8. Automotive lighting device (1) according to claim 7, wherein the conductive wire (4) surrounds the elastomeric material (42).

9. Automotive lighting device (1) according to any of the preceding claims, wherein the extensible portion has a cross section which is a rectangle with one dimension more than 10 times greater than the other.
